# EUROPÄISCHE PATENTSCHRIFT

(11) **EP 1 128 072 B1**
(45) Veröffentlichungstag und Bekanntmachung des Hinweises auf die Patenterteilung: **04.10.2006**
(21) Anmeldenummer: 01103621.7
(22) Anmeldetag: 22.02.2001
(51) Int. Cl.: F15B 15/10, B64C 13/24

(54) **Fluidischer Stellantrieb für ebene Stellbewegungen**
Fluid actuated actuator for linear position movement
Actuateur à fluide pour des déplacements de position linéaire

(30) Priorität: 26.02.2000 DE 10009157
(43) Veröffentlichungstag der Anmeldung: 29.08.2001
(73) Patentinhaber: EADS Deutschland GmbH, 81663 München (DE)
(72) Erfinder: Perez, Juan, 83620 Feldkirchen-Westerham (DE); Voglsinger, Martin, 85617 Assling (DE)

(56) Entgegenhaltungen:
- EP-A- 0 119 435
- DE-A- 1 601 704
- DE-A- 4 312 503
- US-A- 3 202 061
- US-A- 4 712 780
- US-A- 5 154 108
- US-A- 5 839 562

## Beschreibung

Die Erfindung betrifft einen fluidischen Stellantrieb insbesondere zur gegenseitigen Verschiebung von zwei Strukturteilen, wobei der Stellantrieb mittels einer hydraulischen oder pneumatischen Versorgung betrieben wird.

In der DE 4312503 A1 ist ein Faltenbalg mit zwei relativ zueinander zu bewegenden Befestigungsteilen offenbart, der sich bei Betätigung quer zu seinen Falten auseinander oder zusammen bewegt. Die Richtung der auf die Befestigungsteile dadurch ausgeübten Kräfte hängt von der Führung der Befestigungsteile oder der daran angeordneten Bauteile ab. Bei Bauteilen, die sich über einen relativ großen Bereich quer zur Bewegungsrichtung erstrecken, ist daher ein großer mechanischer Führungsaufwand erforderlich. In der DE 3420557 wird ein hydraulisch betriebener Federbalg beschrieben, der mit einer pneumatich beaufschlagten zylindrischen Kammer zusammengekoppelt ist. Der Federbalg ist in einem Kreisbogen gebogen, um mit einer verschwenkbaren Halterung zusammenzuwirken, wobei die zylindrische Kammer als Dämpfungselement arbeitet. Der Federbalg wird hierzu in einem im Querschnitt kreisförmigen Gehäuse geführt. Zur Umsetzung der Schwenkbewgung in eine translatorische Bewegung ist ein entsprechender Umsetzer erforderlich. Dabei ist weiterhin eine entsprechende mechanische Führung der gegeneinander zu bewegenden Bauteile erforderlich.

Ein Nachteil der Stellantriebe nach dem Stand der Technik ist, daß die aufgrund der Stellkräfte auf die Struktur-Bauteile wirkenden Kräfte nur lokal in diese eingeleitet werden. An den Verbindungsstellen zwischen Stellantrieb und Struktur treten daher lokal verhältnismäßig große Kräfte auf, so daß an den entsprechenden Struktur-Bauteilen teilweise aufwendige Krafteinleitungen vorzusehen sind.

Es ist daher die Aufgabe der Erfindung, einen fluidischen Stellantrieb für ebene Stellbewegungen zu schaffen, der die in die entsprechenden Bauteile einzuleitenden Kräfte möglichst flächig überträgt und dabei möglichst einfach, platz- und gewichtssparend gebaut ist.

Diese Aufgabe wird mit den Merkmalen des Anspruchs 1 gelöst. Weitere Ausführungsformen sind in den Unteransprüchen angegeben.

Der erfindungsgemäße fluidische Stellantrieb zur Bewegung eines ersten und eines zweiten Strukturteils relativ zueinander weist zumindest ein mit einem Fluid gefülltes Gehäuse auf, das in seiner Längsrichtung entlang eines je nach der relativen Lage des ausgebildeten Schlitzes (13) verläuft und dessen Seitenwände über dessen Umfangsfläche bereichsweise abwechselnd mit dem ersten und dem zweiten Strukturteil in Verbindungs steht, daß die Seitenwände mittels eines Fluids verformbar, d.h. auseinanderbeweglich oder verschwenkbar sind, um die Strukturteile gegeneinander zu bewegen.

In einer weiteren Ausführungsform kann diesem Gehäuse noch ein weiteres Gehäuse übergestülpt sein, das beidseits neben dem ersten Gehäuse ebenfalls mit dem Fluid gefüllt ist, um eine Veränderung des Querschnitts des ersten Gehäuses durch eine Umwälzung des Fluids zwischen dem ersten Gehäuse und dem Raum zwischen diesem und dem übergestülpten Gehäuse zu erreichen. Insbesondere durch diese Anordnung sind Verstellbewegungen in beiden Richtungen möglich.

In einer weiteren Ausführungsform kann das Fluid in flexiblen Schläuchen vernachlässigbarer Dehnung vorliegen, so daß die Gehäuse nicht abgedichtet werden müssen.

Ein Vorteil der Erfindung ist, daß mit ihr große Stellflächen mit verhältnismäßig geringem Geräteaufwand gegeneinander bewegt werden können, da nur an wenigen Stellen Zuleitungen erforderlich sind.

Ein weiterer Vorteil der Erfindung ist, daß mit dem erfindungsgemäßen Stellantrieb Zug- und Druckbewegungen gleichermaßen ausgeführt werden können. Dabei sind geringe Fluid-Volumina-Bewegungen erfoderlich, so daß keine oder nur kleine Reservoirs für das verwendete Fluid vorzusehen sind. Mit minimalem Energieaufwand ist ein Halten der Strukturteile in bestimmten Stellungen möglich. Durch die erfindungsgemäße Lösung sind nur geringe Leitungslängen für die Fluid-Bewegungen erfoderlich, so daß die Erfindung auch hinsichtlich dem Gewicht und dem Gesamtaufwand, wie z.B. Kosten günstig ist. Insbesondere ist auch vorteilhaft, daß mit der Erfindung ein geschlossenes System realisierbar ist, so daß Leckage-Probleme fast vollständig entfallen.

Auch wird mit dem Stellantrieb nach der Erfindung die Konzentration großer Kräfte, wie sie bei strukturellen Krafteinleitungen nach dem Stand der Technik auftreten, vermieden, da die Einleitung der Kräfte flächig erfolgt.

Die Erfindung wird anhand der beiliegenden Figuren beschrieben. Die zeigen:
Figur 1 eine perspektivische Skizze eines Abschnitts des erfindungsgemäßen Stellantriebs in seiner bevorzugten Ausführungsform, wobei die verdeckten Kantenlinien gestrichelt und die zu bewegenden Strukturteile nicht dargestellt sind,
Figur 2 einen Schnitt durch den erfindungsgemäßen Stellantrieb in Richtung der Stellbewegung, wobei sich der Stellantrieb in einem Betriebszustand befindet, in dem er eine neutrale Stellbewegungs-Position einnimmt,
Figur 3 eine Darstellung des Stellantriebs gemäß Figur 2 in einem Betriebszustand, in dem die zu betätigenden Strukturteile von einer neutralen Stellung zusammen bewegt werden,
Figur 4 einen Schnitt durch den Stellantrieb gemäß Figur 2, wobei sich der Stellantrieb in einem Betriebszustand befindet, in dem die zu betätigenden Strukturteile von einer neutralen Stellung auseinander bewegt werden,
Figur 5a eine schematische Darstellung der Volumina der Druckkammern der bevorzugten Ausführungsform des Stellantriebs nach der Figur 1, wobei der Stellantrieb den Betriebszustand der Figur 2 aufweist,
Figur 5b eine der Figur 5a analoge Darstellung der Druckkammer-Volumina des Stellantriebs nach der Figur 1 im Betriebszustand der Figur 3,
Figur 5c eine der Figur 5a ebenfalls analoge Darstellung der Druckkammer-Volumina des Stellantriebs nach der Figur 1 im Betriebszustand der Figur 4,
Figur 6 eine schematische Darstellung der Veränderung der Querschnittsformen der Druck-Kammern des Stellantriebs nach der Figur 1, wobei die beiden extremen Betriebszustände des Stellantriebs übereinander gezeichnet sind,
Figur 7 eine schematische Darstellung der Druckmittel-Versorgung des Stellantriebs nach der Figur 1,
Figur 8 ein Anwendungsfall des erfindungsgemäßen Stellantriebs zur Verformung eines Teils eines Tragflügels eines Flugzeugs,
Figur 9a einen Schnitt in Flügeltiefen-Richtung durch den Tragflügel der Figur 8, wobei sich der Tragflügel in seiner neutralen Stellung befindet,
Figur 9b einen Schnitt durch den Tragflügel der Figur 8 in dessen Flügeltiefen-Richtung, wobei sich der Tragflügel in seiner maximal verformten Stellung befindet,
Figur 10 ein Anwendungsbeispiel des erfindungsgemäßen Stellantriebs, der zur Bewegung einer Nasenklappe als Teil eines Tragflügels vorgesehen ist, wobei die Nasenklappe in der Figur 10 in der Neutralstellung gezeigt ist,
Figur 11 das Anwendungsbeispiel der Figur 10, wobei die Nasenklappe in einer ausgelenkten Stellung gezeigt ist,
Figur 12 ein weiterer Anwendungsfall des erfindungsgemäßen Stellantriebs zum Betätigen einer Hinterkantenklappe, wobei diese in der Neutralstellung gezeigt ist,
Figur 13 das Anwendungsbeispiel der Figur 12, wobei die Hinterkantenklappe in einer ausgelenkten Stellung gezeigt ist.

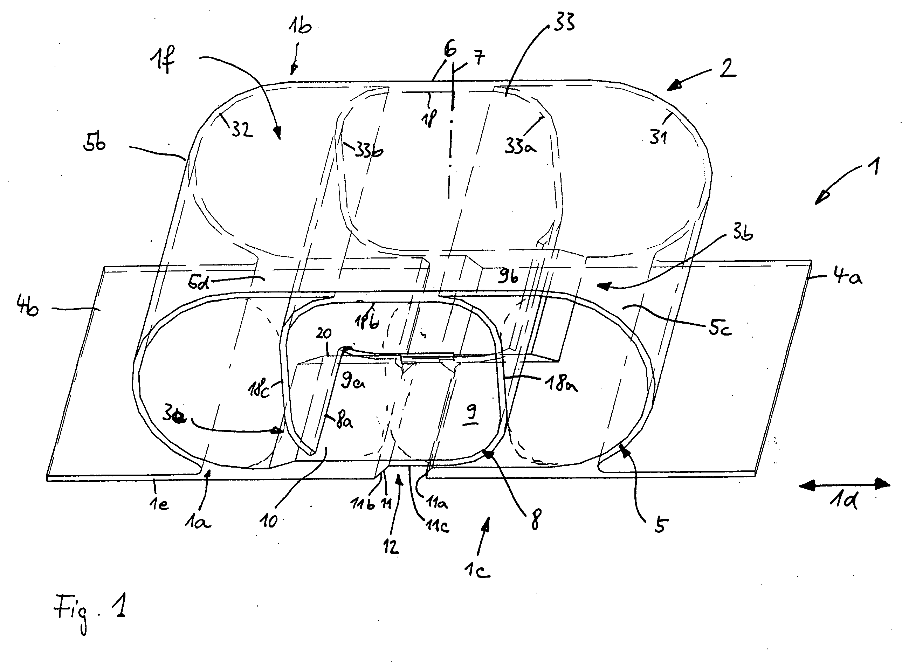

In der Figur 1 ist ein Abschnitt 1 einer bevorzugten Ausführungsform des erfindungsgemäßen Stellantriebs 2 schematisch dargestellt. Dieser Abschnitt 1 umfasst in der Darstellung der Figur 1 eine vordere Seite 1a und eine hintere Seite 1b in Bezug auf eine quer zur Stellbewegung verlaufende axiale- oder Längsrichtung 1c des Stellantriebs 2. Die Längsrichtung 1c kann dabei auch krummlinig verlaufen und ist quer zur Richtung der Stellbewegung 1d gerichtet. Der Stellantrieb kann mehrere Abschnitte 1 umfassen, die dann entlang der Längsrichtung 1c angeordnet sind. Eine Unterseite 1e ist die den Oberflächen der zu betätigenden Strukturteile zugewandte Seite des Stellantriebs 2 und kann in einer speziellen Ausführungsform des Stellantriebs 2 auch die Unterseite der Strukturteile bilden. Die Oberseite 1f des Stellantriebs 2 definiert sich als die der Unterseite 1e gegenüberliegende Seite. Der Stellantrieb 2 ist in Längsrichtung 1c vorzugsweise aus mehreren Abschnitten 1 zusammengesetzt, wobei jeder Abschnitt 1 in Längsrichtung 1c gesehen einen ersten 3a und einen zweiten 3b Bereich umfaßt.

Jeder Abschnitt 1 umfasst eine erste Stellfläche oder einen ersten Strukturteil 4a, der in der Darstellung in der linken Hälfte der Figur 1 dargestellt ist, und eine von diesem getrennte, auf der rechten Seite der Figur 1 gezeigte zweite Stellfläche oder einen zweiten Strukturteil 4b, die Bestandteile womöglich größerer Einheiten sind, die mittels des Stellantriebs 2 gegeneinander zu bewegen sind. Diese können zum einen der Tragflügel und eine Steuerfläche eines Flugzeugs sein. Die Strukturteile 4a, 4b können auch als Flanschteile gestaltet sein, um den Abschnitt 1 des Stellantriebs 2 auf entsprechenden, gegeneinander zu verschiebenden Strukturteilen, wie zum Beispiel den Stellflächen, mittels Befestigungselementen 4c zu befestigen.

Der Stellantrieb 2 in der dargestellten Ausführungsform umfasst ein äußeres Gehäuse 5 vorzugsweise mit in Längsrichtung 1c im wesentlichen gleichbleibender QuerschnittsForm. Die beiden Seitenwände 5a, 5b des äußeren Gehäuses 5 verlaufen je Abschnitt 1 ausgehend von zwei parallel zueinander und sich in Längsrichtung 1c erstreckenden Verbindungsbereichen 5c, 5d von dem ersten 4a bzw. dem zweiten 4b Strukur- oder Flanschteil und laufen in einer oberen Außenseite 6 zusammen. Das äußere Gehäuse 5 ist also in Stellbewegungs-Richtung 1d gesehen mit einem Ende an einem Strukturteil, und mit dem anderen Ende an dem jeweils anderen der beiden zu verstellenden Strukturteile befestigt. Das äußere Gehäuse 5 ist vorzugsweise einteilig ausgebildet und bezüglich einer in der Längsrichtung 1c verlaufenden Ebene 7 symmetrisch ausgebildet.

Im Inneren des äußeren Gehäuses 5 ist ein inneres Gehäuse 8 angeordnet, das in seinem Querschnitt in Längsrichtung 1c gesehen gleichförmig und vorzugsweise einheitlich gebildet ist und das in einem oberen, den Strukturteilen 4a, 4b gegenüberliegenden Teil mit dem äußeren Gehäuse 5 verbunden ist. Das innere Gehäuses 8 ist in verschränkender Weise bereichsweise abwechselnd mit dem ersten 4a und zweiten 4b Strukturteil verbunden. Mit anderen Worten: das innere Gehäuse 8 steht im Inneren des äußeren Gehäuses 5 in benachbarten Bereichen 3a, 3b strukturell mit jeweils einem unterschiedlichen, jeweils auf der gegenüberliegenden Seite gelegenen Strukturteil 4a bzw. 4b in Verbindung oder geht aus diesem Strukturteil hervor. Das innere Gehäuse 8 erhebt sich dadurch mittig oberhalb der Trennfuge der zu betätigenden Strukturteile 4a, 4b. Dadurch bildet es eine Grundfläche 9 aus, die in jedem Bereich 3a, 3b in Stellbewegungs-Richtung zur Hälfte aus einem Strukturteil 4a oder 4b und zum anderem Teil aus der Gehäusewand des inneren Gehäuses 8 gebildet wird, das über das jeweils andere Strukturteil 4b bzw. 4a ragt, so daß das innere Gehäuses 8 mittig auf den Strukturteilen 4a, 4b gelegen ist. Um über QuerschnittsVeränderungen des inneren Gehäuses 8 eine relative Verstellung der Strukturteile zu bewerkstelligen, ist die Grundfläche 9 in Stellbewegungs-Richtung geteilt und bildet das innere Gehäuse 8 in dem Verbindungsbereich mit dem jeweiligen Strukturteil jeweils über diesem ein freies Ende 8a aus.. Die Grundfläche 9 eines Abschnitts 1 ist dabei durch eine erste Grundfläche 9a im ersten Bereich 3a und eine zweite Grundfläche 9b im zweiten Bereich 3b zusammengesetzt.

Der bereichsweise Übergang von dem dem ersten 4a bzw. dem zweiten 4b Strukturteil kann im Inneren des äußeren Gehäuses 5 in Form von sich zungenförmig quer zur Längsrichtung 1c erstreckenden Erhebungen oder Abstufungen 10 gestaltet sein. Im einzelnen sind solche Abstufungen 10 derart ausgestaltet, daß Sie sich bereichsweise und quer zur Längsrichtung 1c erstrecken und in Längsrichtung 1c gesehen miteinander verzahnt sind. Die Ausbildung der Abstufung 10 im Inneren des inneren Gehäuses 8 ermöglicht es, daß die Unterseite 1d des jeweiligen Bereichs 3a bzw. 3b des zugehörigen Strukturteils 4a, 4b unterhalb der Abstufung 10 mit einer Stufe 11 ausgestattet ist, die eine der freien Gegenseite 11a des jeweils gegenüberliegenden Strukturteils 4a, 4b zugewandte Seite 11b aufweist. Die Stufe 11 kann auch als rampenförmige Einlassung ausgebildet sein (Figur 1). Bei Betätigung des Stellantriebs 2, die eine Veränderung der Querschnittform des inneren Gehäuses 8 bewirkt, wird die Gegenseite 11 a entlang des Stufenabsatzes 11c der Stufe 11 zur zugewandten Seite 11b hin oder von dieser weg bewegt. Die Gegenseite 11a und die zugewandte Seite 11b bilden dadurch einen je nach Betätigungs-Zustand des Stellantriebs 2 veränderlichen Schlitz oder eine Ausnehmung 13 aus. Der Spalt 13 verläuft in Längsrichtung 1c vorzugsweise geradlinig, und kann alternativ auch stückweise oder generell krummlinig verlaufen.

Die Strukturteile 4a, 4b können mit dem inneren Gehäuse 8 einteilig ausgestaltet sein oder mittels Befestigungs-Elementen auf diesem befestigt sein. Innerhalb eines Abschnitts 1, wie er in der Figur 1 dargestellt ist, sind jeweils zwei bereichsweise Abstufungen 10 vorgesehen, die parallel zueinander verlaufen, wobei beide Abstufung 10 von jeweils einem anderen Strukturteil 4a, 4b ausgeht und sich jeweils in Gegenrichtung zur benachbarten erstreckt.

Von der Stufe 11 aus und quer zur Längsrichtung 1c gesehen, verläuft das innere Gehäuse 8 also zunächst in Richtung zur gegenüberliegenden Seite 11a bzw. 11b des jeweils gegenüberliegenden Struktur- oder Flanschteils 4a bzw. 4b und erstreckt sich über dieses hinaus, wobei es eine Grundfläche 18 ausbildet. Von dort verläuft das innere Gehäuse 8, eine Seitenwand 18b quer zur Grundfläche 18 ausbildend, zur oberen Außenseite 6 des äußeren Gehäuses 5, an dem das innere Gehäuse 8 befestigt ist und eine obere Wand 18b ausbildet. Von dort verläuft das innere Gehäuse 8 mit einer der Seitenwand 18a gegenüberliegenden Seitenwand 18c zurück in Richtung zur Grundfläche 18 und endet mit einem freien Ende 19 knapp oberhalb der Abstufung 10 auf der Seite desjenigen Strukturteils 4a bzw. 4b, mit dem der jeweilige Bereich 3a bzw. 3b des inneren Gehäuses 8 verbunden ist. Zusammen mit der Teilung der Grundfläche 9 ist es daher möglich, daß bei Betätigung des Stellantriebs 2 die Seitenwände 18a und 18b relativ zueinander bewegt werden können, wodurch das freie Ende 19 oberhalb der zungenförmigen Erhebung 10 translatorisch bewegt wird.

Das innere Gehäuse 8 kann im wesentlichen die Querschnittsform eines vorzugsweise geradlinigen, in Längsrichtung 1c verlaufende Rohres oder die eines Rechtecks mit Abrundungen in den Eckbereichen haben.

Der beschriebene Verlauf des inneren Gehäuses 8 ist von einem Bereich 3a zum jeweils benachbarten Bereich 3b eines Abschnitts 1 in Bezug auf seine Beweglichkeit gegensinnig gestaltet. Die Erhebung 10 des jeweils benachbarten Bereichs 3a bzw. 3b eines Abschnitts 1 beginnt auf dem jeweils gegenüberliegenden Strukturteil 4a bzw. 4b. Wenn also beispielsweise ein erster Bereich 3a des Abschnitts 1, der sich in Längsrichtung 1c gesehen über die Hälfte des Abschnitts 1 erstreckt, so gestaltet ist, daß ihre Abstufung 10 an dem zweiten Flanschteil 4b ausgebildet ist, so ist diese zungenförmige Erhebung 10 des zweiten Bereichs 3 b an dem ersten Flanschteil 4a ausgebildet. Innerhalb eines Abschnitts 1 ist also das innere Gehäuse 8 in einem Bereich 3a, 3b mit dem zweiten Flanschteil 4b und in jedem benachbarten Bereich 3b bzw. 3a mit dem ersten Flanschteil 4a verbunden. Die Abstufungen 10 sind zungenförmig gebildet, d.h. sie weisen quer zur Längsrichtung 1c verlaufende Seitenflächen 20 aus. Die Seitenfächen 20 der jeweils benachbarten Abstufungen 10 liegen sich gegenüber und verlaufen parallel zueinander. Dadurch ist das innere Gehäuse 8 im Querschnitt veränderbar, wobei die Verbindung mit den zu betätigenden Strukturteilen 4a, 4b durch die Verzahnung der einzelnen Abstufungen 10 und die bereichsweise Verbindung des inneren Gehäuses 8 abwechselnd an dem ersten und an dem zweiten Strukturteil 4a, 4b eine Relativbewegung der Strukturteils 4a, 4b bwirkt, wenn der Querschnitt des inneren Gehäuses verändert wird.

Alternativ zur beschriebenen Ausführungsform kann der erfindungsgemäße Stellantrieb 2 auch keine Abstufung 10 und auch keine Stufe 11 aufweisen. In diesem Fall geht das Strukturteil 4a bzw. 4b ohne diese Merkmale in das innere Gehäuse 8 über. Die Gegenseite 11a muß bei Betätigung des Stellantriebs auch in diesem Fall unter der Unterseite 1d entlang beweglich sein, also in diesem Fall in überlappender Weise.

Die Abschlüsse des inneren 8 und äußeren 5 Gehäuses auf den in Längsrichtung 1c gesehenen Endseiten sind konventionell und je nach Anwendungsfall gestaltet.

Im Bereich des ersten Flanschteils 4a zwischen dem äußeren Gehäuse 5 und dem inneren Gehäuse 8 ist ein erster Schlauch oder eine schlauchförmige Abdichtung 31 angeordnet, die in Längsrichtung 1c verläuft und zur Aufnahme vom Druckmittel, und zwar insbesondere von Druckgas oder Hydraulik-Flüssigkeit vorgesehen ist. Ebenso ist im Bereich oberhalb des zweiten Flanschteils 4b zwischen dem äußeren Gehäuse 5 und dem inneren Gehäuse 8 ein zweiter Schlauch oder eine zweite schlauchförmige Abdichtung 32 vorgesehen. Im Inneren des inneren Gehäuses 8 ist zumindest ein mittlerer Schlauch 33 vorgesehen, jedoch vorzugsweise ein erster 33a und ein zweiter 33b mittlerer Schlauch, die auf jeweils einer Seite der Ebene 7 gelegen sind. Es können auch mehr als zwei mittlere Schläuche 33 im inneren Gehäuse 8 angeordnet sein. Die folgende Beschreibung bezieht sich auf die Verwendung von zwei Schläuchen 33a, 33b im inneren Gehäuse 8. Die Schläuche 31, 32, 33 sind aus einem Material beschaffen, das keine Dehnung, jedoch eine Verformung des Querschnitts zulässt. Die Schläuche 31, 32, 33, 33a, 33b sind vorzugsweise als flexible Schalen gestaltet. Sie müssen auch so beschaffen sein, daß sie das für den Stellantrieb 2 vorgesehene Druckmittel ohne Leckage aufnehmen können.

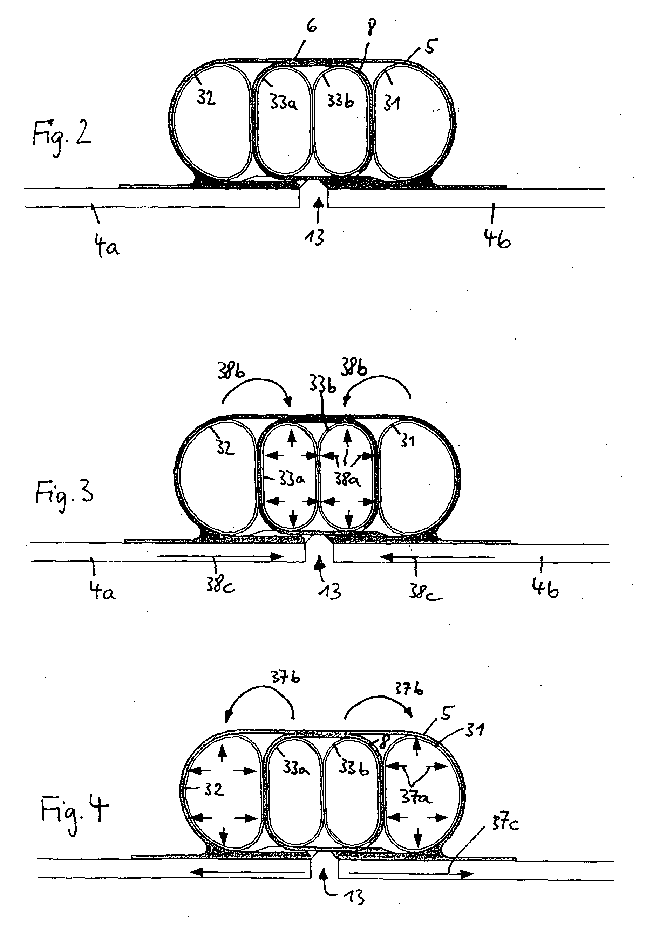

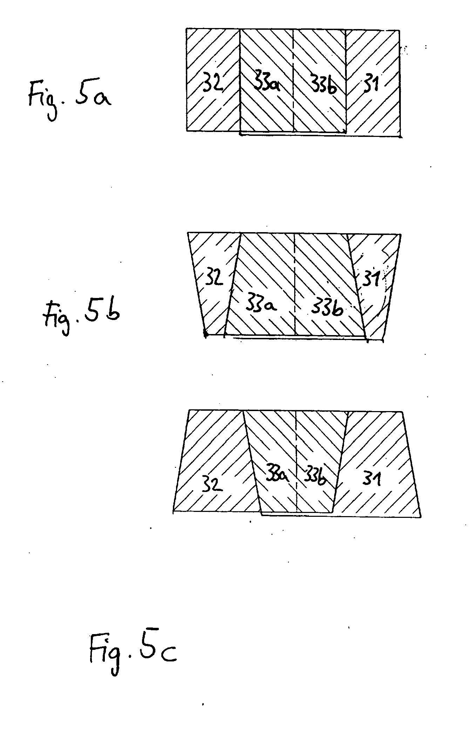

Im folgenden wird die Funktionsweise des erfindungsgemäßen Stellantriebs anhand der Figuren 2 bis 6 beschrieben, wobei die Figur 2 schematisch einen Ausgangszustand, der ein Geleichgewichtszustand ist, die Figur 3 ein Zusammenfahren oder-bewegen und die Figur 4 ein Auseinanderfahren od -bewegen der zu betätigenden Strukturteile 4a, 4b mittels des Stellantriebs 2 darstellt, wobei die Figuren 2 bis 4 Schnitte durch den zweiten Bereich 3b des Abschnitts 1 der Figur 1 sind.

Im Ausgangszustand, also wenn die durch Betätigung des Stellantriebs 2 gegeneinander zu verschiebenden Strukturteile 4a, 4b in einer Referenz- oder Neutral-Lage zueinander gelegen sind, herrscht im Inneren der Schläuche 31, 32, 33a, 33b ein vorbestimmter Referenzdruck. Vorzugsweise herrscht in den Schläuchen 31, 32, 33a, 33b derselbe Druck. Der Schlitz 13 hat in dieser Stellung der Strukturteile 4a, 4b eine vorbestimmte Größe. Die Querschnittsflächen der Schläuche 31, 32, 33a, 33b sind schematisch in der Figur 5a dargestellt: dort sind sie als Rechtecke mit gleichem Flächeninhalt gezeigt.

Um die Strukturteile 4a, 4b auseinander zu bewegen (Fig. 4), wird der Druck in den mittleren Schläuchen 33a, 33b verringert und gleichzeitig der Druck in dem ersten 31 und zweiten 32 Schlauch erhöht. Diese Druckerhöhung ist mit den Pfeilen 37a verdeutlicht. Die Druckerhöhung kann durch eine Umwälzung des Druckmittels von dem inneren Gehäuse 8 bzw. dem ersten mittleren 31 und zweiten mittleren 32 Schlauch auf das äußere Gehäuse 5 bzw. die äußeren Schläuche 31, 32 geschehen (Pfeil 37b). Da das Material der Schläuche 31, 32, 33, 33a, 33b im wesentlichen nicht dehnbar ist, erfolgt bei Bedrücken des ersten 33a und zweiten 33b Schlauchs - sofern diese vorgesehen sind - eine Verformung des Querschnitts des inneren Gehäuses 8, wie sie in der Figur 3 und schematisch in der Figur 5b dargestellt ist. Dabei führt das den mittleren Schläuchen 33a , 33b zusätzlich zugeführte Druckmittel zu einer Erweiterung der Ausdehnung des Querschnitts des inneren Gehäuses 8. Der Querschnitt des inneren Gehäuses 8 ändert sich entsprechend der Druck-Änderungen, da die Schläuche 33, 33a, 33b eng am inneren Gehäuse 8 anliegen und letzteres vom Material her so beschaffen ist, daß es durch die Schläuche verformt werden kann.

Eine Bedrückung des ersten 31 und des zweiten Schlauchs 32 führt also zu einer Verkleinerung des Querschnitts des inneren Gehäuses 8 im Bereich der Flanschteile 4a, 4b. Die Seitenwände 18a und 18b des inneren Gehäuses 8 werden zusammengedrückt, wodurch der Schlitz 13 und somit der Abstand zwischen dem ersten 4a und dem zweiten 4b Flanschteil verringert wird (Pfeile 37c). Auch dies geschieht je nach den strukturellen oder dynamischen Anforderungen an die Stellbewegungen über eine vorbestimmte oder die gesamte Länge 1c des Stellantriebs 2, so daß auch die entsprechenden zu bewegenden Strukturteile 4a, 4b insgesamt näher zusammenbewegt werden.

Bei der Querschnitts-Änderung des inneren Gehäuses 8 tritt die Bewegung der Seitenwände 18a, 18b quer zur Längsrichtung 1c in der Höhe der oberen Wand 18b wesentlich geringer auf als auf der Höhe der Strukturteile 4a, 4b. Die Vergrößerung des Querschnitts in diesem unteren Bereich tritt dadurch auf, daß dort das innere Gehäuse 8 wegen der bereichsweisen freien Enden 8a der Seitenwand 18c größere Verformungswege hat als der der oberen Wand 18b nahegelegene Teil, der keine freibewegliche Stelle aufweist. Dadurch, daß die Seitenwände 18a, 18c in Längsrichtung 1c gesehen einteilig gestaltet sind, wird die Bewegung der Seitenwand, z.B. 18c in dem Bereich, in dem diese das freie Ende 8a aufweist, auf den jeweils benachbarten Bereich 3a bzw. 3b übertragen, der an dieser Seitenwand 18c kein freies Ende 8a aufweist.

Die Vergrößerung des Querschnitts des inneren Gehäuses 8 insbesondere nahe der Flanschteile 4a, 4b bewirkt eine Verkleinerung des Schlitzes 13 oder eine Verringerung des Abstandes zwischen den gegenüberliegenden Seiten 11a, 11b des ersten 4a und des zweiten Strukturteils 4b, da sich die Grundfläche 9 des inneren Gehäuses 8 und dessen den jeweils gegenüberliegenden Strukturteil 4a bzw. 4b überlappenden Bereich vergrößert. Diese Grundflächenvergrößerung geschieht bereichsweise, d.h. durch Bewegung der jeweils ersten Grundfläche 9a zur jeweils zweiten Grundfläche 9b in entgegen gesetzten Richtungen. Dies wird dadurch erreicht, daß die gegenüberliegenden Seitenwände 18a bzw 18c durch Bedrückung des inneren Gehäuses 8, die in der Fig. 3 mit den Pfeilen 38a dargestellt ist, auseinander bewegt werden. Die Bedrückung des inneren Gehäuses 8 kann mittels einer Umwälzung des Druckmittels von dem äußeren Gehäuse 5 bzw. den äußeren Schläuchen 31, 32 auf das innere Gehäuse 8 bzw. die mittleren Schläuche 33a, 33b erreicht werden. Diese Fluidtransfer-Richtung ist mit den Pfeilen 38b verdeutlicht. Auf diese Weise wird über die gesamte Länge 1c des Stellantriebs 2 der Schlitz 13 verkleinert und somit die Strukturteile 4a und 4b näher zusammen bewegt (Pfeile 38c). Das äußere Gehäuse 5 übernimmt dabei eine Art Stützfunktion gegenüber dem inneren Gehäuse 8.

Die Schläuche können eingespart werden, wenn statt dessen das innere Gehäuse entsprechend abgedichtet ist.

Der erfindungsgemäße Stellantrieb kann auch mit nur einem, dem inneren Gehäuse 8 gestaltet sein, das ausgehend von einem Neutral-Zustand als atmendes Gehäuse durch Zu- und Abfuhr des Bedrückungs-Mittels arbeitet.

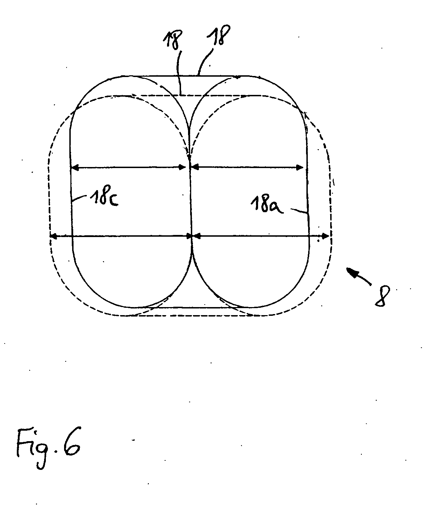

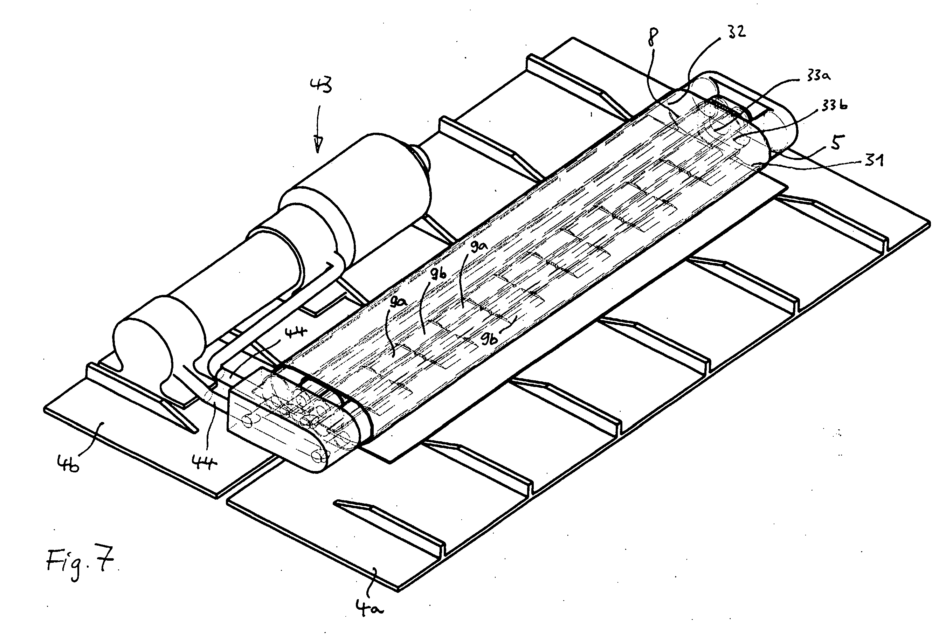

Die zur Erzielung der gewünschten Stellbewegungen erforderlichen Volumenänderungen im inneren Gehäuses 8 ist schematisch in der Figur 6 dargestellt, in der Schwekbewegungen der Seitenwände 18a, 18c jedoch nicht gezeigt sind. Um die Bedrückung des ersten 31 und des zweiten Schlauchs bzw. des ersten 33a und zweiten 33b mittleren Schlauchs zu gewährleisten , ist ein entsprechendes Versorgungssystem für das Druckmittel nach dem Stand der Technik vorzusehen. Der Anschluß des erfindungsgemäßen Stellantriebs 2 in der Ausführungsform mit zwei mittleren Schläuchen 33a, 33b im inneren Gehäuse 8 und einem äußeren Gehäuse 5 ist in der Figur 7 dargestellt. Dabei kann ein Hydraulikmotor 43 nach dem Stand der Technik zum Einführen oder Verdrängen des Fluids oder des Druckmittels in den bzw. aus dem Stellantrieb 2 vorgesehen sein. Als Druckmittel kann eine Hydraulik-Flüssigkeit oder ein Gas verwendet werden. Entsprechende Leitungen 44 müssen zwischen dem Fluid-Motor 43 und dem inneren Gehäuse 8 oder gegebenenfalls zu den mittleren Schläuchen 33a, 33b desselben, sowie - soweit in der jeweiligen Ausführungsform vorhanden - zu den beiden Teilen des äußeren Gehäuses 5 seitlich des inneren Gehäuses 8.

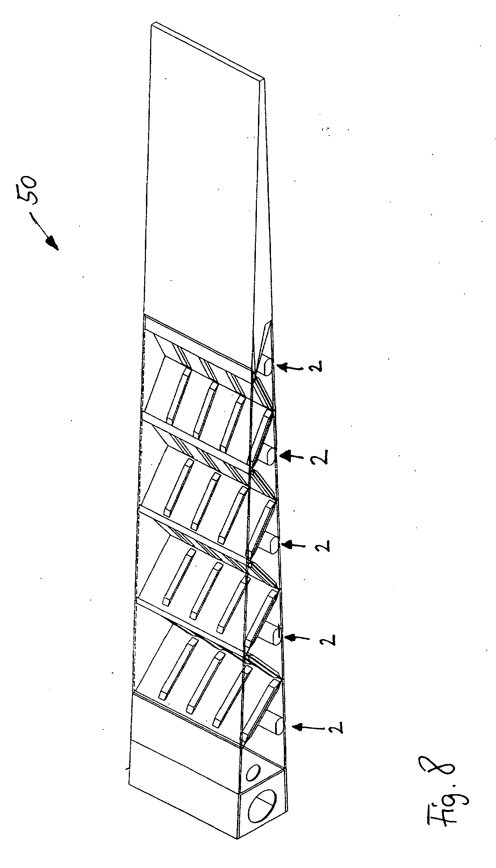

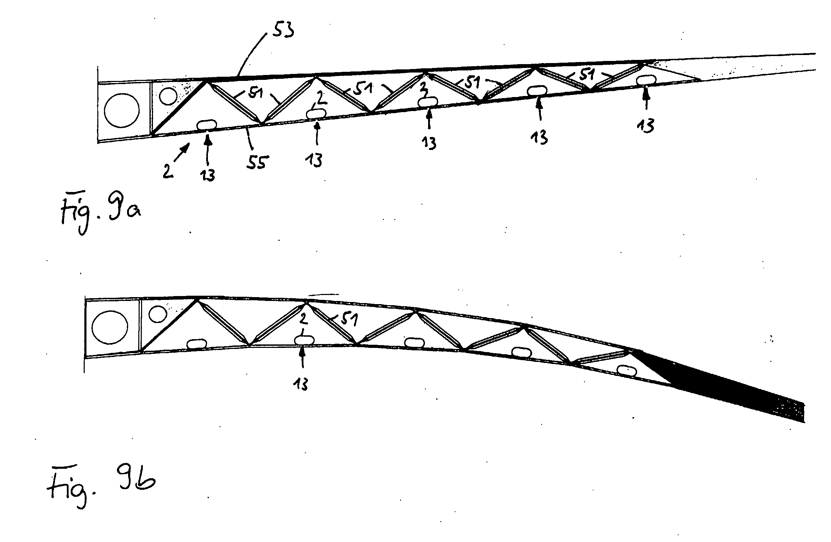

Anhand der Figuren 8, 9a, 9b wird ein Anwendungsfall des erfindungsgemäßen Stellantriebs 2 beschrieben. Dabei ist der Stellantrieb in einem Tragflügel eines Flugzeugs eingebaut, um dessen Sehnenform zu verändern bzw. einzustellen wie dies in den Figuren 9a, 9b gezeigt ist. Hierzu sind in der Länge unveränderliche Stützwände oder Stützstreben 51 innerhalb des Tragflügels 50 vorgesehen, die jeweils zwischen einer oberen Beplankung 53 und einer unteren Beplakung 55 angeordnet sind. Die obere Beplankung 51 und die untere Beplankung 55 sind von einer im wesentlichen nicht dehnbaren Beschaffenheit. Jedoch ist die unter Beplankung 55 mit Schlitzen 13 als Teil eines Stellantriebs 2 versehen. Die Schlitze 13 teilen die untere Beplankung 55 in Abschnitte 57, wobei die Schlitze 13 quer zur Richtung der mittels der Stellantriebs 2 bewirkten Verlängerung oder Verkürzung der unteren Beplankung 55 verlaufen, um bei gleichbleibender Fläche der oberen Beplankung 53 eine Verformung des Flügelprofils zu bewirken (Vergleich der Figuren 9a und 9b). Die Wände oder Stützen 51 bewirken eine im wesentlichen gleichbleibende Beabstandung der oberen Beplankung 53 von der unteren Beplankung 55.

Um das Profil eines Tragflügels von einem Ausgangszustand, wie er in der Figur 9a dargestellt ist, zu einem Verformungs- Zustand des Tragflügels, wie er zum Beispiel in der Figur 9b dargestellt ist, zu verändern, werden durch die voranstehend beschriebene Betätigung der Stellantriebe 2 die Schlitze 13 verstellt. Da die obere Beplankung 53 in Richtung der Profiltiefe gleich bleibt, verformt sich das Profil nach der Figur 9b.

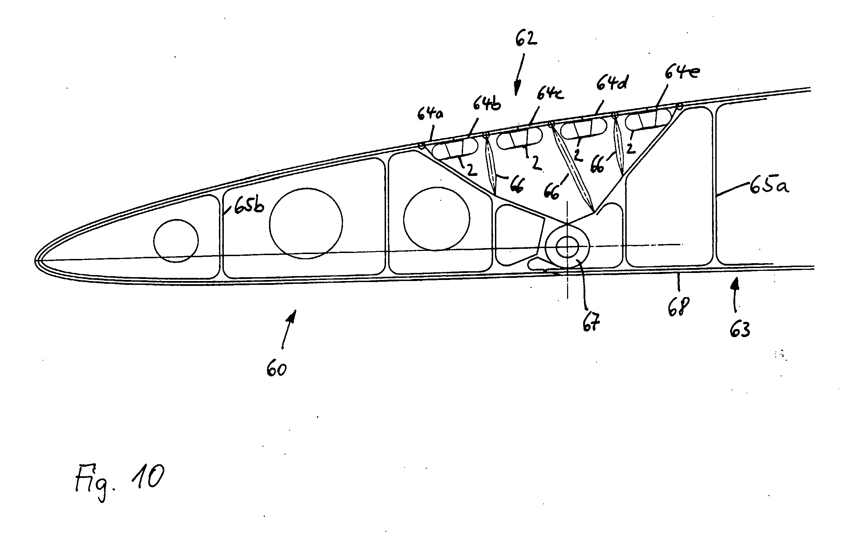

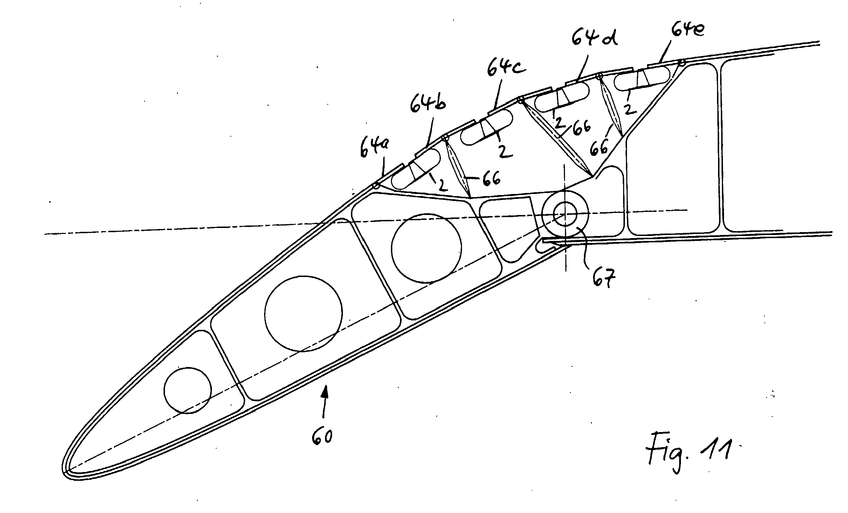

Ein weiteres Anwendungsbeispiel des erfindungsgemäßen Stellantriebs 2 ist in den Figuren 10, 11 dargestellt. Dabei ist der Stellantrieb 2 zur Bewegung einer Nasenklappe 60 als Teil eines Tragflügels vorgesehen, die die Funktion eines Vorflügels haben kann. Diese Anwendung kann aber auch allgemein für jede beliebige Stellfläche an jeder Stelle eines Tragflügels sein. An einer Seite der Beplankung 61, an der der Tragflügel zur Ausführung der Stellbewegungen der Nasenklappe 60 zu krümmen ist, also im Übergangsbereich 62 zwischen dem Tragflügel-Grundkörper 63 und der Nasenklappe 60, ist zumindest ein erfindungsgemäßer Stellantrieb 2 eingebaut. Wie anhand der Figuren 1 bis 6 beschrieben, ist der Stellantrieb 2 an der Innenseite der Außenhaut 61 angeordnet, um zur Betätigung der Nasenkalappe 60 entsprechende Strukturteile 64a, 64b, 64c, 64d, 64e gegeneinander hin- und her zu bewegen. Üblicherweise weist sowohl der Grundkörper 63 als auch die Nasenklappe 60 eine innere Strukur 65a bzw. 65b zur Stüzung derselben auf. An diesen inneren Strukuren 65a, 65b ist der Übergangsbereich 62 der Außenhaut 61 mittels Stützelementen 66 abgestützt. Dabei müssen zum Ausgleich der Bewegungen der Außenhaut 61 bei der Betätigung des zumindest einen Stellantriebs 2 die Stützelemente 66 drehbar oder verschwenkbar an den inneren Strukturen 65a, 65b gelagert sein (im Detail nicht gezeigt). Wenn der zumindest eine Stellantrieb 2 nur auf einer Seite der Nasenklappe 60 vorgesehen ist, kann ein Drehlager 67 an der gegenüberliegendenen Seite des Tragflügels oder an der gegenüberliegnden Außenhaut 68 des Tragflügels angeordnet sein. Eine Verstellposition der Nasenklappe ist inder Figur 11 gezeigt.

Die an Hand einer Nasenklappe beschriebene Funktionsweise kann für jede Art von Stellflächen angewendet werden, also z.B. für Hinterkantenklappen, Spoiler, Seiten- oder Höhenruder.

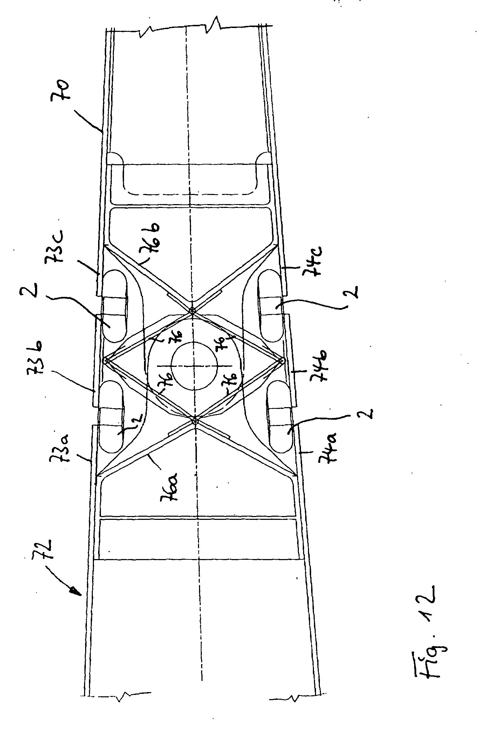

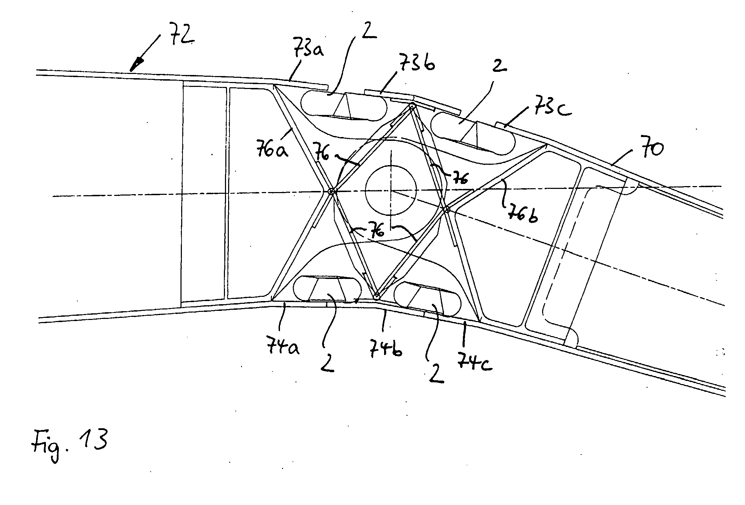

In den Figuren 12 und 13 ist eine weiterer Anwendungsfall des erfindungsgemäßen Stellantriebs 2 an Hand einer Hinterkantenklappe 70 beschrieben. In der Figur 12 ist dabei die Hinterkantenklappe 70 in der Neutralstellung und in der Figur 13 in einer ausgelenkten Stellung gezeigt. Der Stellantrieb 2 ist an beiden gegenüberliegenden Außenhäuten 71a, 71b des Übergangsbereichs 71 zwishen dem Grundkörper 72 der Tragfläche und der Hinterkantenklappe 70 angeordnet. Auf beiden Seiten 71a, 71b werden durch Betätigung der Stellantriebe 2 entsprechnde Strukturteile 73a, 73b, 73c bzw. 74, 74b, 74c gegeneindander verschoben, wie aus dem Vergleich der Figuren 12 und 13 hervorgeht. Die Außenhäute 71a, 71b werden mittels Stützelementen 76 gegenüber einer inneren Tragflügelstruktur 76a sowie einer inneren Klappenstruktur 76b abgestützt. Zum Ausgleich der Auslenk-Bewegungen sind die Stützelemente 76 drehbar oder verschwenkbar an den Außenhäuten 71a, 71b und an den inneren Strukturen 76a, 76b gelagert. Diese Lagerungen müssen keine Drehlager sein. Dabei können sie auch als flexible Lager ausgebildet sein.

## Patentansprüche

1. Fluidischer Stellantrieb zur translatorischen Bewegung eines ersten und eines zweiten Strukturteils quer zu einem Abstand (13) zwischen diesen relativ zueinander, mit einem von einem Druckmittel gefüllten Gehäuse (8), das in seiner Längsrichtung entlang des Abstandes (13) verläuft und mit diesen verbunden ist,
wobei die Grösse des Abstandes (13) von der relativen Lage der einander gegenüberliegenden Seitenwände (18a, 18c) des Gehäuses (8) abhängt, die mittels eines Druckmittels gegeneinander zur Bewegung der Strukturteile bewegbar sind, **dadurch gekennzeichnet, daß**
das Innere des ersten Gehäuses (8) mit einem flexiblem Schlauch ausgefüllt ist und die Seitenwände (18a, 18c) entlang des Abstandes (13) bereichsweise abwechselnd mit dem ersten und dem zweiten Strukturteil in Verbindung stehen.

2. Fluidischer Stellantrieb zur translatorischen Bewegung eines ersten und eines zweiten Strukturteils relativ zueinander nach dem Anspruch 1, **dadurch gekennzeichnet, daß**
ein äußeres Gehäuse (5) außerhalb des ersten Gehäuses (8) vorgesehen ist, dessen an den Seitenwänden (18a, 18c) des ersten Gehäuses liegenden Seitenwänden mit jeweils einem Strukturteil (4a, 4b) verbunden ist, wobei der Bereich zwischen dem ersten Gehäuse (8) und dem äußeren Gehäuse (5) mit Druckmittel beaufschlagbar ist,
daß der Schlauch im ersten Gehäuse (8) eine vernachlässigbare Dehnung aufweist und daß in Längsrichtung seitlich des ersten Gehäuses (8) im Raum zwischen diesem und dem zweiten Gehäuse auf jeder Seite des ersten Gehäuses (8) jeweils ein weiterer flexibler Schlauch mit vernächlässigbarer Dehnung gelegen ist, wobei die Wand des äußeren Gehäuses (5) am ersten Gehäuse (8) derart fixiert ist, daß die Bewegung der Seitenwände des ersten Gehäuses (8) durch eine Druckmittel-Umwälzung des Druckmittels zwischen dem Schlauch und den weiteren Schläuchen erfolgt.

3. Fluidischer Stellantrieb zur Bewegung eines ersten und eines zweiten Strukturteils (4a, 4b) relativ zueinander nach dem Anspruch 1 oder 2, **dadurch gekennzeichnet, daß** das Innere des ersten Gehäuses (8) mit einem flexiblem Schlauch ausgefüllt ist.

4. Fluidischer Stellantrieb zur Bewegung eines ersten und eines zweiten Strukturteils (4a, 4b) relativ zueinander nach dem Anspruch 1, 2 oder 3, **dadurch gekennzeichnet, daß** der Schlauch im ersten Gehäuse eine vernachlässigbare Dehnung aufweist und daß in Längsrichtung seitlich des ersten Gehäuses im Raum zwischen diesem und dem zweiten Gehäuse jeweils ein flexibler Schlauch mit vernächlässigbarer Dehnung ausfüllt, so daß die Verschwenkung der Seitenwände des ersten Gehäuses durch eine Druckmittel-Umwälzung des Druckmittels zwischen dem mittleren Schlauch und den äußeren Schläuchen erfolgt.

## Claims

1. A fluidic actuating drive for the translational movement of a first and a second structural part relative to each other and transversely to an interval (13) between them, with a housing (8) which is filled with a pressure medium and which extends in its longitudinal direction along the interval (13) and is connected to them,
wherein the size of the interval (13) depends upon the relative position of the mutually opposed lateral walls (18a, 18c) of the housing (8) which are movable with respect to each other by means of a pressure medium in order to move the structural parts, **characterized in that**
the interior of the first housing (8) is filled with a flexible hose, and the lateral walls (18a, 18c) are connected locally in an alternating manner to the first and the second structural part along the interval (13).

2. A fluidic actuating drive for the translational movement of a first and a second structural part relative to each other according to Claim 1, **characterized in that**
an outer housing (5) is provided outside the first housing (8), of which the lateral walls resting against the lateral walls (18a, 18c) of the first housing are connected to one structural part (4a, 4b) in each case, wherein the region between the first housing (8) and the outer housing (5) is capable of being acted upon with pressure medium,
the hose in the first housing (8) has an insignificant degree of extension, and a further flexible hose with an insignificant degree of extension is arranged in each case in the longitudinal direction to the side of the first housing (8) in the space between the said first housing (8) and the second housing on each side of the first housing (8), wherein the wall of the outer housing (5) is fixed to the first housing (8) in such a way that the movement of the lateral walls of the first housing (8) takes place by a circulation of the pressure medium between the hose and the further hoses.

3. A fluidic actuating drive for the movement of a first and a second structural part (4a, 4b) relative to each other according to Claim 1 or 2, **characterized in that** the interior of the first housing (8) is filled with a flexible hose.

4. A fluidic actuating drive for the movement of a first and a second structural part (4a, 4b) relative to each other according to Claim 1, 2 or 3, **characterized in that** the hose in the first housing has an insignificant degree of extension, and in the longitudinal direction to the side of the first housing a flexible hose with an insignificant degree of extension fills in the space between the said first housing and the second housing in each case, so that the pivoting of the lateral walls of the first housing takes place by a circulation of the pressure medium between the middle hose and the outer hoses.

## Revendications

1. Actionneur fluidique pour déplacer en translation une première et une deuxième pièces de structure l'une par rapport à l'autre, transversalement par rapport à une distance (13) entre celles-ci, comprenant un boîtier (8) rempli d'un fluide sous pression, qui s'étend dans sa direction longitudinale le long de la distance (13) et est relié à celle-ci, la dimension de la distance (13) dépendant de la position relative des parois latérales opposées (18a, 18c) du boîtier (8), parois qui peuvent être déplacées l'une par rapport à l'autre au moyen d'un fluide sous pression pour permettre le déplacement des pièces de structure,
**caractérisé en ce que**
l'intérieur du premier boîtier (8) est rempli d'un tuyau flexible et les parois latérales (18a, 18c) sont reliées sur certaines zones de manière alternée avec la première et la deuxième pièces de structure.

2. Actionneur fluidique pour déplacer en translation une première et une deuxième pièces de structure l'une par rapport à l'autre selon la revendication 1,
**caractérisé en ce qu'**
un boîtier extérieur (5) prévu à l'extérieur du premier boîtier (8), a des parois latérales reposant au niveau des parois latérales (18a, 18c) du premier boîtier et respectivement reliées à une pièce de structure (4a, 4b), la zone entre le premier boîtier (8) et le boîtier extérieur (5) pouvant être sollicitée par un fluide sous pression, le tuyau disposé dans le premier boîtier (8) présente une extension négligeable et dans la direction longitudinale à côté du premier boîtier (8), dans l'espace entre celui-ci et le deuxième boîtier, de chaque côté du premier boîtier (8), se trouve respectivement un autre tuyau flexible ayant une extension négligeable, la paroi du boîtier extérieur (5) au niveau du premier boîtier (8) étant fïxée de telle sorte que le mouvement des parois latérales du premier boîtier (8) s'effectue par une circulation du fluide sous pression entre le tuyau et les autres tuyaux.

3. Actionneur fluidique pour déplacer une première et une deuxième pièces de structure (4a, 4b) l'une par rapport à l'autre selon la revendication 1 ou 2,
**caractérisé en ce que**
l'intérieur du premier boîtier (8) est rempli d'un tuyau flexible.

4. Actionneur fluidique pour déplacer une première et une deuxième pièces de structure (4a, 4b) l'une par rapport à l'autre selon la revendication 1, 2 ou 3,
**caractérisé en ce que**
le tuyau disposé dans le premier boîtier présente une extension négligeable et dans la direction longitudinale à côté du premier boîtier, dans l'espace entre celui-ci et le deuxième boîtier, un tuyau flexible respectif ayant une extension négligeable est rempli, de telle sorte que le pivotement des parois latérales du premier boîtier s'effectue par une circulation du fluide sous pression entre le tuyau central et les tuyaux extérieurs.
